# EUROPEAN PATENT SPECIFICATION

(11) **EP 2 855 361 B1**
(45) Date of publication and mention of the grant of the patent: **20.07.2016**
(21) Application number: 12790927.3
(22) Date of filing: 27.11.2012
(51) Int. Cl.: C02F 1/00, B63J 4/00, C02F 1/02, C02F 1/32, C02F 1/34, C02F 1/78

(54) **DE-BALLAST FILTRATION**
FILTRATION VON BALLASTWASSER WAHREND DES LENZVORGANGS
FILTRATION D'EAU DE BALLAST

(30) Priority: 01.06.2012 WO PCT/EP2012/060380; 16.10.2012 DK 201270629
(43) Date of publication of application: 08.04.2015
(73) Proprietor: Desmi Ocean Guard A/S, 9400 Nørresundby (DK)
(72) Inventor: KALHØJ, Mark, 9300 Saeby (DK); INGVORSEN, Christian, 5792 Årslev (DK); CLAVILLE, Michael, 9000 Aalborg (DK)
(74) Representative: Zacco Denmark A/S
(86) International application number: PCT/EP2012/073736
(87) International publication number: WO 2013/178296

(56) References cited:
- EP-A1- 1 717 205
- WO-A1-2005/061388
- JP-A- 2007 090 212
- JP-A- 2007 229 575

## Description

The present invention relates in general to handling and treatment of ballast water.

The invention finds its primary use within the area of ballasting applications on board maritime structures such as ships or rigs and the like as well as in land based facilities configured for treating ballast water.

The present invention relates to a method of rendering living organisms in seawater to be loaded as ballast water, or in ballast water to be discharged from a ballast water system, inviable, as specified in claim 1. The method according to the invention may be applied or exercised as a method of operating a ballast water treatment plant.

It is understood that the expressions, "maritime structures", "ship", "boat", "vessel" or "rig", throughout this specification is meant to denote any kind of maritime structure suitable for performing operations, carrying persons or cargo or a combination thereof.

It is further understood that the expression "seawater" is, throughout this specification, meant to denote any kind of water found in any kind of maritime environment incl. saltwater, freshwater and brackish water etc.

Further, it is understood that the expression "inviable", which in this specification is used to describe a state of organisms, throughout this specification is meant to denote a state wherein the organisms are rendered unable to survive.

Even further, it is understood that the expression "membrane filtration", when used in the present specification, is defined as a pressure- or vacuum-driven separation process in which particulate matter is rejected by an engineered barrier primarily through a size exclusion mechanism. The mechanism has a measurable removal efficiency of a target organism and the efficiency can be verified through the application of direct integrity tests.

Below filtration definitions define the filtration technology applied when used in the present specification:
- Microfiltration having a pore size approximately in the range of 0.1 - 0.2 µm,
- Ultrafiltration having a pore size approximately in the range of 0.01 - 0.05 µm,
- Nanofiltration employs the principles of reverse osmosis to remove dissolved contaminants from water. Nanofiltration is typically applied for membrane softening or the removal of dissolved organic contaminants, and
- Reverse Osmosis is the reverse of the natural osmosis process, i.e., the passage of a solvent, such as water, through a semi-permeable membrane from a solution of higher concentration to a solution of lower concentration against the concentration gradient, achieved by applying pressure greater than the osmotic pressure to the more concentrated solution. The pressure-driven membrane separation process employs the principles of reverse osmosis to remove dissolved contaminants from water.

### Background

On ships, such as cargo ships or passenger ships, it is often, for various technical reasons, required to carry water ballast.

Water ballast typically serves to oppose an unfavourable resulting centre of gravity resulting from a high or off-centre centre of gravity of the loaded cargo or even the ship itself. Further, in cargo ships, in so called ballast conditions, water ballast is often used to obtain sufficient draft in order to submerge the propeller and rudder. A ballast condition is a loading condition of a ship where the weight of the stowed cargo by itself does not result in a sufficient draft of the ship.

Another typical application of water ballast is for stabilizing or anti heeling purposes where a part of the carried seawater is shifted from side to side in order to counteract rolling of a ship.

Seawater is widely used as ballast medium because of its ability to be easily loaded and unloaded via pumping arrangements.

Seawater is typically pumped on board the ship directly from the environments wherein the ship is located. Hereby various species of organisms are, together with the ballast water, moved together with the ship from the place of loading the water to a non native place of unloading the water.

A part of the living organisms carried in the ballast tanks die during the pumping process as well as and under the voyage, and more die when the organisms are released at the place of unload, however, a substantial part of the organisms survive both the voyage as well as being unloaded in a foreign environment.

The introduction of foreign organisms into a new and, for the foreign organisms', unnatural environment has been known to have catastrophic consequences to the environment wherein the organisms are released.

It is estimated that about 3-5 billion tonnes of ballast water each year are moved from its natural environment and pumped out in foreign environments.

New directives for treatment of ballast water, aimed at rendering the organisms carried by the ballast water systems harmless for the environment wherein they are released, have been adopted by the International Maritime Organisation (IMO). The directives dictate that measures should be taken such that abovementioned relocation of living organisms is hindered, and further, the directives emphasize that any applied treatment of ballast water must be safe and environmentally acceptable.

IMO have developed and setup specific requirements to performance of the ballast water treatment systems. The requirements dictate a performance framework for the actual treatment of the ballast water as well as limits for toxic content in the ballast water discharged.

In particular, the directives state that any applied technique must show convincing effects as well as be environmentally friendly. Further, the directives state that any applied technique must be economically and technically reasonable to apply.

Present ballast water treatment systems are configured for filtration and subsequent after treatment of water to be stored in ballast water tanks. Today's systems typically filtrates the ballast water only when pumping in or loading, meaning that the de-ballasting water is discharged without filtering. The reason for this non-treatment of de-ballasting water is that the ballast water filter, when backwashed, potentially releases organisms which have not been exposed to filtering and subsequent after treatment whereby viable organisms may be released in foreign environments.

### Background art

As per the above, it is common to expose an intake stream of ballast water, after filtration, to a subsequent after treatment in order to render living organisms passing through the filter inviable.

The after treatment may constitute vacuum treatment, chlorination, exposure to ultraviolet light, ozone treatment and cavitation etc.

According to one prevailing technique applied for purposes of rendering living organisms carried by ships ballast water inviable, ozone is pumped into ballast tanks and/or into a flow of ballast water being lead to ballast tanks through one or more distributing pipes.

JP 2007 229575 A discloses an apparatus for, and a method of, in a harmless way treating untreated ballast water comprising biological contents such that the ballast water, according to the disclosure, is ready to be loaded into a ballast water tank. The apparatus and method further is configured for discharging backwashing water at the site of loading the ballast water.

WO 10149638, by the applicant of the present invention, disclose a ballast water treatment apparatus configured for treatment of seawater to be carried as ballast water by a maritime structure such as a ship. The system comprises a seawater inlet, a seawater outlet and means for adding ozone to a flow of seawater through the apparatus. The apparatus further comprise, downstream the means for adding ozone, means for irradiating the seawater/ozone blend with ultraviolet light.

US 2002/017483 A discloses a floating mobile self-contained membrane filtration treatment vessel, or barge, which is suitable for use in the treatment of contaminated marine waters and shipboard wastes including ballast water, gray water, and black water and excess dredge waters. The mobile treatment vessel includes a micro or ultrafiltration membrane treatment system for micron and submicron sized particulate removal. According to section [0058] of the disclosure, the membrane filtration vessel is suitable for retaining particles of sizes ranging from 0.01 µm to 10 µm.

US 5,647,980 A discloses a system for processing relatively small volumes of waste water such as water found in residential homes. The system comprises a chamber configured to hold waste water and a first filter adapted to remove coarse material from the waste water. A second filter is provided in order to remove fine materials from the waste water. The system further includes a disinfectant chamber adapted to disinfect the waste water. The system also includes a pump adapted to pump the waste water from the chamber through the first and second filters and the disinfectant chamber.

WO 1 106 426 0 A discloses an apparatus for treatment of liquids such as water. The apparatus includes a filter module with a filter, an inlet for liquid, a first outlet for liquid and a second outlet for filtered liquid. The inlet and the first outlet are positioned on a first side of the filter and the second outlet is positioned on the second side of the filter. The apparatus further includes a first UV-treatment module with a first UV-light source, connected to the first outlet of the filter module. The UV module is adapted to receive unfiltered liquid from the filter module, and to expose the liquid to UV-light from the first UV-light source. The apparatus further includes a second UV-treatment module with a second UV-light source connected to the second outlet of the filter module adapted to receive filtered liquid from the filter module, and to expose said liquid to UV-light from the second UV-light source.

WO 0 507 994 8 A discloses a backwashable seawater filter.

EP1717205 A1 discloses an apparatus for rendering ballasting water harmless to the environment by removal of microbes. According to the disclosure, microbes present in the water may be rendered inviable by mechanically damaging the microbes in a filter or in a mechanical treatment unit, and subsequently exposing the microbes to after treatment e.g. in the form of sterilization, combined with chlorination or other chemical detoxification treatment for extinction of microbes in the seawater.

US 2008/0190826 A discloses a ballast water treatment system for treating ballast water. According to the disclosure, a back washable filter in the pathway of the ballast water receives the raw water and screens sediment from the raw water to produce initially processed water which contains at least some marine organisms. A UV or other anti biocidal device is connected between the filter and the ballast tank, for disabling or killing the marine organisms in the initially processed water to produce treated ballast water for the main outlet to the ballast tank.

Other relevant prior art includes WO2007/130029.

### Brief description of the invention

The present invention seeks to provide a method of, in an efficient, environmentally friendly and economically reasonable manner, eliminating, or substantially reduce, biological contents in ballast water unloaded from maritime structures or otherwise discharged into the sea.

Up to this day, prior art has failed to teach a simple and yet reliable and inexpensive ballast water treatment system which in a safe and reliable manner, without substantially increasing the weight and/or particulars of the system, provide a system configured for eliminating organisms growing inside ballast water systems incl. tanks etc., from being released to the environment in a viable condition.

According to the method of the present invention, there is provided a ballast water treatment plant wherein the plant and the filter unit are configured for backwashing at least one of the filter screens by leading backwashing water away from the filter unit via the second outlet and a backwashing water conduit interconnecting the second outlet for filter backwashing water with a suction side of the ballast water pump while maintaining a primary flow of ballast water from the inlet towards the first outlet of the filter unit. Further, the backwashing water conduit returns the backwashing water to the inlet of the filter unit independently of the ballast water tank, i.e. the backwashing water is not returned to the tank.

The backwashing water constitutes a mix or solution or slurry of filter retentate and water.

The plant may be configured for treating ballast water during de-ballasting, i.e. the plant may be configured such that the ballast water pump may draw water from a ballast water tank and lead the water through the filter unit prior to offloading the water. This way, organisms growing inside the ballast water system incl. tanks etc. are subject to a treatment during de-ballasting operation which is identical to the treatment imposed to the ballast water during intake or loading.

The invention, according to some aspects, eliminates needs for subsequent chemical and/or detoxification treatment in order to render biological content in the seawater inviable.

The invention departs from the state of the art inter alia in that the plant is configured for leading, without further water treatment, the flow of backwashing water, to the inlet of the filter module independently of the ballast water tank or tanks such that filter retentate reach, or contact, the filter screens repeatedly without entering the ballast water tanks. By this, a viable population of organisms living in the tanks is prevented.

The backwashing waters' repeated contact, and thereby the filter retentates' repeated contact, with the filter screens has been found to render living organisms inviable, and consequently, subsequent treatment of the filter backwashing water becomes superfluous.

The invention is considered particularly beneficial during ballast offloading, or de-ballasting, as the backwashing water already is freed from large and hard biological contents.

The present invention seeks to provide a method of, in an efficient, environmentally friendly and economically reasonable manner, eliminate, or substantially reduce, biological contents in ballast water unloaded from maritime structures or otherwise discharged into salt water as well as fresh water.

In salty seawater it is preferred to operate ballast water filters with filter screens comprising relatively large permeability, or mesh size. The large mesh size provides high filter capacity. The biological contents in salty seawater mainly include hard shelled organisms which are rendered inviable as a result of contacting or passing a filter screen.

In freshwater, the biological contents mainly include, as already mentioned, soft organisms which tend to slip through filter screens typically applied to ballast water filtration is salt water as these screens typically is provided with larger mesh-sizes. As the biological content passing the filter screens typically survive, it is considered necessary to adapt the mesh size of the filter screens to the contents of the ballast water.

Today, this adaptation is performed manually by selecting and installing, or selecting and replacing, the filter screens with filter screens having proper permeability considering the biological content to be removed for the ballast water.

The backwashing water, and thereby also the filter retentate, may be lead to the inlet of the filter unit via a backwashing water conduit and a suction side of said ballast water pump. The backwashing water conduit may be connected to a conduit interconnecting the ballast water tank and the ballast water pump.

The plant may further be configured for, during ballast offload operation and via the second outlet and the backwashing water conduit, lead, without further water treatment, the flow of filter backwashing water to the inlet of the filter module.

Leading the flow of backwashing water to the inlet of the filter module may constitute leading the flow to an inlet of the ballast water pump such that the flow of filter backwashing water may be circulated in-between the ballast water pump and the ballast water filter module without returning to the ballast water tank. By this, a portion of backwashing water passes the filter repeatedly.

Filter module may be configured for backwashing at least one filter screen while at least one filter screen is operative to filter the primary flow of ballast water flowing from the inlet to the first outlet of the filter module.

The filter screens may have a pore size selected such that a majority of living organisms is retained by the one or more filter screens.

The filter screens may have a pore size in the range of 0.05 - 0.3 µm or in the range 0.1 - 0.2 µm.

The filter screens may be configured for retaining particles larger than 30 µm.

The ballast water treatment plant and the filter unit may further include:
- pressure sensors arranged to, and configured for, monitoring differential pressure over the filter screens,
- processing means configured to control the means for backwashing the filter screens on basis differential pressure thresholds.

The processing means may be configured to, on basis of pressure measurements established by the pressure sensors, monitoring differential pressure over the filter screens and, on basis of the differential pressure measurements, backwash a part of the filter screens until the differential pressure reach a predetermined set point.

The processing means may be configured to maintain the differential pressure within a pressure range set by a system operator by at least partially backwashing the filter screens.

The processing means may be configured to maintain a predetermined differential pressure, or pressure range, over the filter screens within a range lying above the differential pressure of a filter accommodating clean filter screens. This by at least partially backwashing one or more filter screens.

The processing means may be configured to maintain a predetermined differential pressure over the filter screens by allowing the means for backwashing the filter screens to backwash only some or a part of the filter screens and leaving the remaining parts or filter screens unwashed.

The means for backwashing the filter screens may constitute a revolving drain, and the processing means may be configured to, during backwash, cause the means for backwashing to turn less than a full revolution whereby one or more of the filter screens are left unwashed.

According to the present invention, a method of rendering living organisms in seawater to be loaded as ballast water, or in ballast water to be discharged from a ballast water systems, inviable, is disclosed. The method includes the step of, in a ballast water treatment plant comprising a backwashable ballast water filter module, leading filter backwashing water return to an inlet of the filter module independently of a ballast water tank and via a backwashing water conduit interconnecting a backwashing water outlet of the filter module with an inlet of a ballast water pump. By this, backwashing water is circulated in a loop including the backwashable ballast water filter module and a ballast water pump.

According to one embodiment of the invention, the method may include a step of maintaining a differential pressure over filter screens arranged in the ballast water filter module in a preset pressure range by:
- monitoring differential pressure over the filter screens,
- comparing the differential pressure with a preset pressure range set by a system operator,
- when the differential pressure exceed the predetermined pressure range, proceed to initiate gradual backwash of the filter screens,
- when the differential pressure reach a lower boundary of the preset pressure range, cease backwash.

By this, the plant including the filter unit will be configured for selectively operating with mesh sizes, or permeability, suitable for ballast water filtration in fresh water as well as in salt water without replacing the filter screens of the ballast water filter.

The authors note that up to this day, prior art has failed to teach a simple and yet reliable and Inexpensive ballast water filtration plant which in a safe and reliable manner, without substantially increasing the weight and/or particulars of the plant, provide a plant configured for selectively operating with mesh sizes, or permeability, suitable for ballast water filtration in fresh water as well as in salt water without replacing the filter screens of the ballast water filter.

Accordingly, there is further provided a ballast water filtration wherein the processing means may be configured to, on basis of pressure measurements by the pressure sensors disposed on each side of the filter screens, monitor-ing differential pressure over the filter screens and on basis of the differential pressure, backwash a part or a portion of the filter screens until the differential pressure reach a predetermined set point.

The predetermined differential pressure set point may lie above the differential pressure of a clean filter.

By this, the filter screen or screens of a ballast water treatment plant or system will demonstrate an adaptable, or adjustable, permeability to organisms as filter residue, or filter cake, actively contribute in defining a maximum mesh size of the filter screen or screens.

The plant may be configured for maintaining the flow of backwashing water through the filter module at least until a majority of living organisms in the flow of backwashing water is rendered inviable. Accordingly, suitable sensing or testing means may be provided in order to determine the state of the organisms.

The flow of backwashing water preferably may be maintained until the water comprise less than 10 living organisms in excess of 50 µm per m³ and/or less than 10 living organisms below 10 µm per ml.

The plant further includes a backwashing conduit arranged between a ballast water tank and the second outlet of the filter module. Leading the backwashing water to the inlet of the filter module constitute, in this embodiment, leading the backwashing water via, and thereby back to, a ballast water tank of a ship.

The plant may be configured for backwashing one or more filter screens without substantially decreasing the primary flow of ballast water through the plant.

The filter module may be configured for backwashing at least one filter screen while at least one filter screen is operative to filter said primary flow of ballast water flowing from said inlet to said first outlet of said filter module.

The plant further may include an ultraviolet light treatment unit and the plant may, by means of conduits and during ballast loading operation and/or ballast unloading operation, further be configured to draw In seawater from a sea chest and/or from a ballast water tank by means of the ballast water pump. By this, the water is lead through the ballast water filter and the ultraviolet light treatment unit where after the water is ready for ballasting and/or offloading.

The ultraviolet light treatment unit further may include an ozone injection zone.

The ultraviolet light treatment unit further may be configured to generate ozone by means of irradiating seawater or air comprising oxygen with UV light.

The plant further may be configured for ballast water treatment, or ballast water after treatment, by means of one or more of, in combination or not, cavitation, ultrasound, electrolysis, chlorination, electrochemical treatment, ClO₂ Chlorine dioxide, Vitamin K, Vitamin C, Advanced oxidation, hydroxyl radical, coagulation, filtration or reduction of oxygen.

The plant further may be configured for, during ballast offloading operation and by means of a second backwashing water conduit, lead backwashing water out of the filter module and into means configured for after treatment of the ballast water where after the backwashing water is ready for discharge.

The filter module may constitute a backwash filter module such as a Bollfilter or equivalent.

The filter module may constitute a backwash filter module such as a candle filter or equivalent.

The filter module may comprise a plurality of filter screens.

### Brief description of the figures

Figure 1 is a principal diagram of a ballast water treatment plant according to available prior art.
Figure 2 is principal diagram of an embodiment of a ballast water treatment plant.
Figure 3 is a principal diagram of another embodiment of a ballast water treatment plant.
Figure 4 is a principal diagram of a filter unit for ballast water filtration plant .
Figure 5 is a principal diagram of another filter unit for a ballast water filtration plant.
Figure 6 is a principal sectional view through a backwashable ballast water filter unit comprising revolving drains.

### Detailed description of the invention with reference to the figures

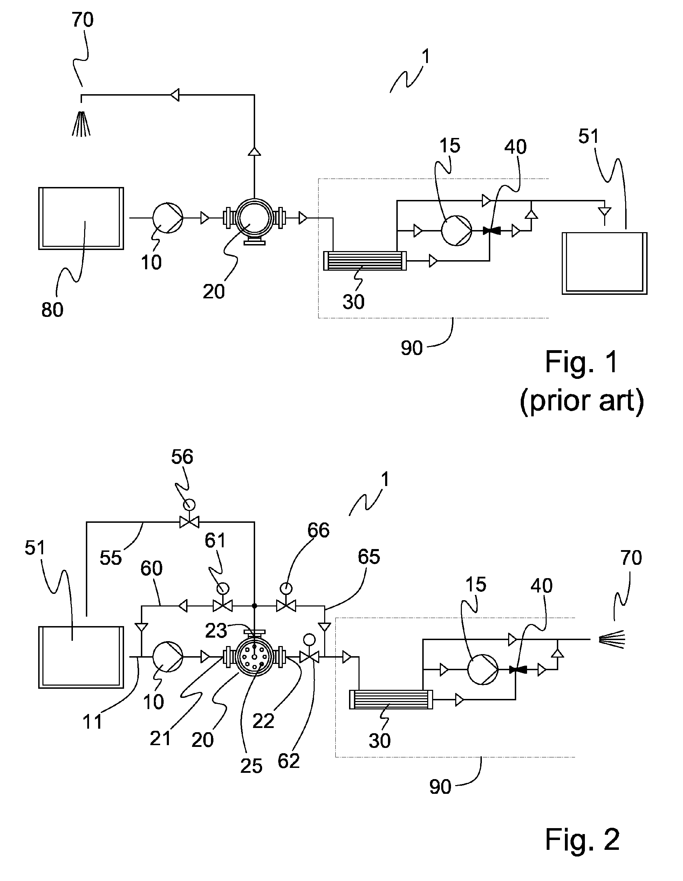

Figure 1 illustrates one typical ballast water treatment plant according to recent prior art. Seawater to be loaded as ballast water is, via sea chest 80 and by means of ballast water pump 10, pumped through the ballast water filter 20 where after the ballast water is, possibly via supplemental pump 15, pumped into an after treatment station 90 which in the illustrated embodiment constitute means 30 for irradiation with ultraviolet light and subsequent means 40 for ozone treatment. The ballast water is after this point ready for ballasting in a ballast water tank 51.

During de-ballasting operation, or ballast water off loading operation, the prior art plant according to figure 1 pump the ballast water overboard 70 without filtration or treatment. It has been found that organisms may live and grow inside the ballast water system incl. ballast water tanks etc. and this unfiltered and/or untreated release of ballast water comprising viable organisms is, as per the above, of course undesirable.

Figure 2 illustrates a ballast water treatment plant of a method according to the present invention. The depicted plant is shown under ballast offloading operation. During ballast loading operation, the plant operates substantially as described with reference to figure 1; apart from the plant being configured for backwashing one or more filter screens 25 of the filter module 20 through the backwashing conduit 60 while maintaining a primary flow of filtered water through the plant. The backwashing water is, as can be seen in figure 2, returned to the inlet 21 of the filter module 20 without further treatment.

As shown in figure 2, the plant may be provided with a backwashing water conduit 60 for the flow of filter backwashing water. The backwashing water conduit may be provided with valve means 61.

In one mode of operation, upon commence of de-ballasting operation, the ballast water filter 20 is backwashed by means of circulation established via the backwashing water conduit 60. Upon circulation in or for a predetermined period, e.g. 2, 5, 8 or even 20 seconds or more, or upon the differential pressure reaching a predetermined level, the ballast water to be unloaded is lead through the ballast water filter and overboard or, as an alternative, into the after treatment station 90 which in the illustrated embodiment constitute means 30 for irradiation with ultraviolet light and subsequent means 40 for ozone treatment. The ballast water is after this point ready for discharge 70.

Seawater contains, besides living organisms, also minerals. The minerals contained in the seawater will be removed from the ballast water during first passage through the plant, i.e. during ballast loading operation. It is therefore mainly organisms growing inside the system and reaching a particle size larger than 40 µm which establishes a need for backwashing when de-ballasting.

The conduit 65 as shown in figure 2, and optionally the valve 66, may be provided in order to backwash the filter 20 into the after treatment section 90 allowing the backwashing water to enter the after treatment section without filtering.

As per the above, instead of discharging the backwashing water, the backwashing water is pumped back to the suction side of the ballast pump 10 via the backwashing water conduit 60 resulting in the backwashing water repeatedly passes the filter unit 20 without other treatment than contacting the filter means. As the living organisms suffer severely when passing or contacting the filter means, the organisms are rendered non-viable.

In case solid materials like minerals etc. passes the filter unit 20 during ballast operation, the materials may reach the filter during subsequent de-ballast operation. In order to clear the filter of such materials a second backwashing water conduit 65 may be provided such that the ballast water filter 20 may be backwashed into the after treatment section 90 or directly overboard.

A valve or throttle means 62 placed just after the filter unit 20 and the first outlet 22 may provide an increased pressure within the filter during backwashing; by this the plant will be able to backwash water into the normal flow stream, possibly just before the UV section or after treatment section 90. The effect of this is that even though the filter is engaged also when de-ballasting, no backwashing water will leave the plant or system without treatment.

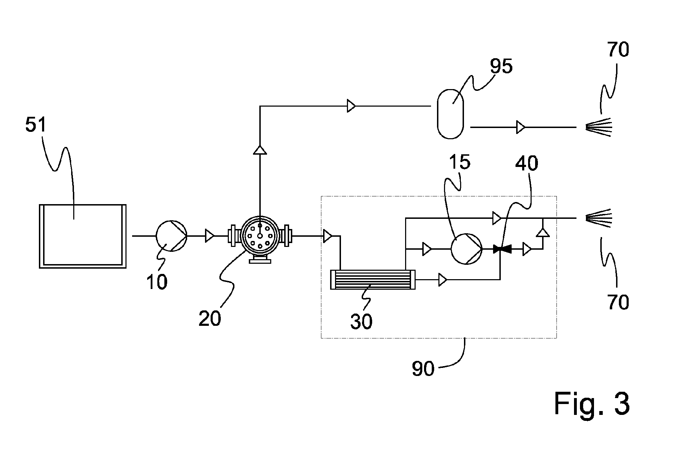

Figure 3 illustrates a plant provided with an alternative to pumping the backwashing water back to the suction side of ballast pump 20, or to the UV section 30 or after treatment section 90, such as shown in figure 2. By this, it may be possible to pump the backwashing water to a backwashing water treatment station 95. The backwashing water treatment station 95 may constitute not shown means for heating the backwashing water up to a temperature where it is considered sterilized or to a degree of heating treatment wherein the backwashing water is not considered critical for the environment.

The means for heating the water may be heated by means of a ships waste heat recovery system etc. Further, it will also be possible to pump the backwashing water into a retention tank where the backwashing water is treated possibly by addition of chemicals, cavitation, ultrasound, electrolysis, chlorination, electrochemical treatment, ClO₂ chlorine dioxide, vitamin K, vitamin C, advanced oxidation, hydroxyl radical, coagulation, filtration or reduction of oxygen, UV, or ozone before being pumped overboard 70 or otherwise stored.

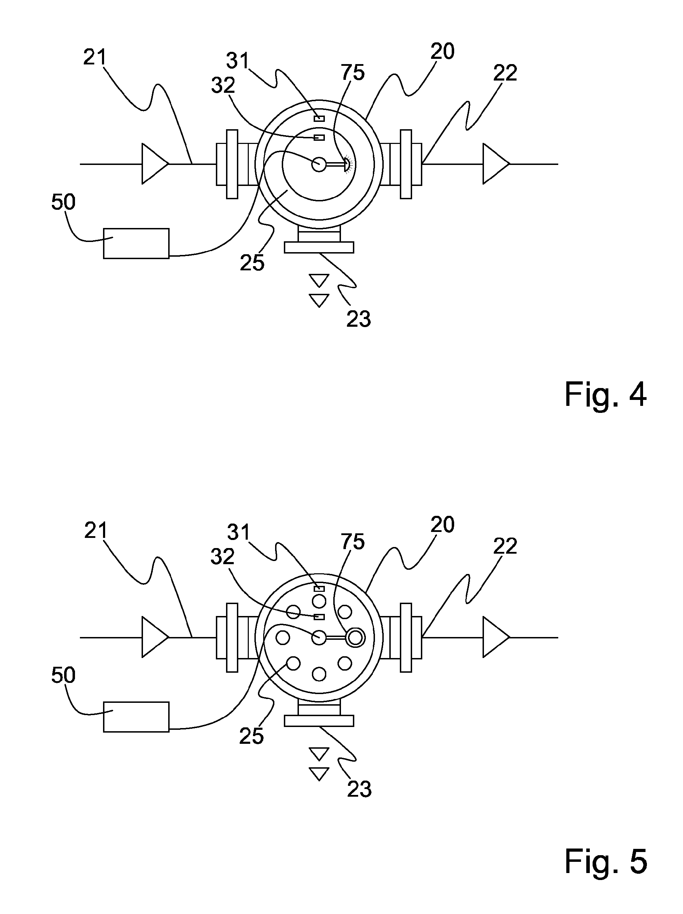

Figures 4, 5 and 6 illustrate portions of typical ballast water filtration plants according to various embodiments.

In figure 4, a filter comprising a single large filter screen 25 is shown. The means 75 for backwashing the filter single screen 25 may be configured for backwashing only a portion of the screen 25 in order to maintain the differential pressure, measured by the pressure sensors 31 and 32 within a range lying above the differential pressure of a clean filter.

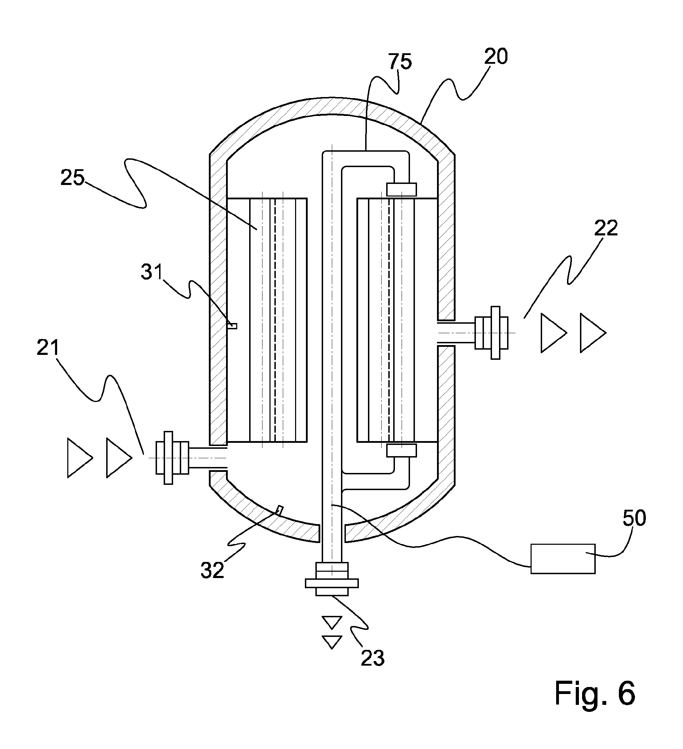

Figures 5 and 6 schematically show portions of ballast water filtration plants including a ballast water filter comprising a plurality of filter screens 25. The filter according to figures 5 and 6 may constitute candle filters. The means 75 for backwashing the filter screens 25 are configured for selectively backwashing the filter screens 25 by rotating a portion of the means for backwashing. The means for backwashing may constitute one or more revolving drains. This type of filter is available from suppliers like BOLL & KIRCH Filterbau GmbH and others.

In ballast water filtration plants comprising filter units according to figures 5 and 6, the means for backwashing 75 may be configured to backwash only some of, or a portion of, the filter screens 25.

Tests has shown, after a partial backwash of the filter screen or screens, that the remaining filter residue, or filter retentate, left on the unwashed filter screens will disperse quickly onto backwashed portions of the filter whereby the permeability, or mask size, of the filter screen or screens are maintained below that of a clean filter. Tests have shown similar effect in filters configured as per figure 4.

In order to maintain a certain level of, or quantity of, filter residue or retentate, which is often referred to as "filter cake", on the filter screen, the plant and method according to an aspect of the present invention may be configured for, in addition to, or as an alternative to differential pressure measurement, initiate partial backwash of the filter screen or screens on basis of predetermined time intervals, through flow and other forms or monitoring.

It has been found that a clean filter having a mask clearance in the range of 30 - 50 µm will be suitable for operating as a clean filter having a mask clearance in the range of 15 - 20 µm by applying partial backwash in accordance with the present invention.

The method according to the present invention may be provided to a ship or equivalent as a retrofit or as a plant installed during the building process of the ship or equivalent. Further, the invention as such may be applied to land based water treatment facilities.

Conclusively, a ballast water treatment method of operation, configured for treating water to be delivered into a ballast. tank is disclosed. The method is configured for, during ballast offload operation and by means of a first backwashing water conduit, lead backwashing water from a ballast water filter to a suction side of a ballast water pump. This way, filter backwashing water is circulated through the ballast water pump and the ballast water filter.

The term "comprises/comprising/comprised of" when used in this specification incl. claims is taken to specify the presence of stated features, integers, steps or components but does not preclude the presence or addition of one or more other features, integers, steps, components or groups thereof.

## Claims

1. A method of rendering living organisms in seawater to be loaded as ballast water, or in ballast water to be discharged from a ballast water system, inviable, said method includes the step of, in a ballast water treatment system (1) including a backwashable ballast water filter module (20) comprising:
- at least two filter screens (25) accommodated in a filter chamber,
- means (75) configured for backwashing at least one filter screen (25),
- an inlet (21) for ballast water to be filtered,
- a first outlet (22) for a primary flow of filtered ballast water, and
- a second outlet (23) for a flow of filter backwashing water,
leading filter backwashing water return to said inlet (21) of said filter module (20) independently of a ballast water tank and via a backwashing water conduit (60) interconnecting a backwashing water outlet of said filter module with an inlet of a ballast water pump such that said backwashing water is circulated in a loop including said backwashable ballast water filter module (20) and a ballast water pump.

2. The method of claim 1 including a step of maintaining a differential pressure over said at least two filter screens (25) in a preset pressure range by:
- monitoring differential pressure over said filter screens (25),
- comparing said differential pressure with a preset pressure range set by a system operator,
- when said differential pressure exceed said predetermined pressure range, proceed to initiate gradual backwash of said filter screens (25),
- when said differential pressure reach a lower boundary of said preset pressure range, cease backwash.

## Patentansprüche

1. Verfahren, um lebende Organismen in als Ballastwasser zu beladendem Seewasser, oder in aus einem Ballastwassersystem abzulassendem Ballastwasser, nicht lebensfähig zu machen, welches Verfahren in einem Ballastwasseraufbereitungssystem (1), welches ein rückspülbares Ballastwasserfiltermodul (20) umfassend:
- zumindest zwei in einer Filterkammer aufgenommene Filtersiebe (25),
- Mittel (75) für die Rückspülung von zumindest einem Filtersieb (25),
- einen Eingang (21) für zu filtrierendes Ballastwasser,
- einen ersten Ausgang (22) für eine primäre Strömung von gefiltertem Ballastwasser, und
- einen zweiten Ausgang (23) für eine Strömung von Filterrückspülwasser,
umfasst, den folgenden Schritt umfasst: Leiten von Filterrückspülwasser zurück zum Eingang (21) des Filtermoduls (20) unabhängig von einem Ballastwassertank und durch eine Rückspülwasserleitung (60), welche einen Rückspülwasserausgang des Filtermoduls mit einem Eingang einer Ballastwasserpumpe derart miteinander verbindet, dass das Rückspülwasser in einem Kreislauf zirkuliert wird, welcher das rückspülbare Ballastwasserfiltermodul (20) und eine Ballastwasserpumpe umfasst.

2. Verfahren nach Anspruch 1 umfassend einen Schritt des Aufrechterhaltens eines Differenzdrucks der zumindest zwei Filtersiebe (25) in einem vorgegebenen Druckbereich durch:
- Überwachung eines Differenzdrucks der Filtersiebe (25),
- Vergleichen des Differenzdrucks mit einem durch einen Systembetreiber vorgegebenen Druckbereich,
- wenn der Differenzdruck den vorgegebenen Druckbereich überschreitet, Einleiten einer schrittweisen Rückspülung der Filtersiebe (25),
- wenn der Differenzdruck eine untere Grenze des vorgegebenen Druckbereichs erreicht, Aufhören der Rückspülung.

## Revendications

1. Procédé pour rendre des organismes vivants dans l'eau de mer à charger en tant qu'eau de ballast, ou dans l'eau de ballast à être déchargée à partir d'un système d'eau de ballast, inviable, ledit procédé comprend l'étape consistant, dans un système de traitement d'eau de ballast (1) comportant un module de filtre d'eau de ballast à rétro-lavage (20) comprenant:
- au moins deux filtres à tamis (25) logés dans une chambre de filtration,
- des moyens (75) configurés pour le rétro-lavage d'au moins un filtre à tamis (25),
- une entrée (21) pour l'eau de ballast à filtrer,
- une première sortie (22) pour un écoulement primaire d'eau de ballast filtrée, et
- une deuxième sortie (23) pour un écoulement d'eau à rétro-lavage filtrée,
à retourner l'eau à rétro-lavage filtrée à ladite entrée (21) dudit module de filtre (20) indépendamment d'un réservoir d'eau de ballast et par l'intermédiaire d'un conduit d'eau à rétro-lavage (60) interconnectant une sortie de l'eau à rétro-lavage dudit module de filtre ayant une entrée d'une pompe à eau de ballast si bien que ladite eau à rétro-lavage est mise en circulation dans une boucle incluant ledit module de filtre d'eau de ballast à rétro-lavage (20) et une pompe à eau de ballast.

2. Procédé selon la revendication 1, comprenant une étape consistant à maintenir une pression différentielle sur lesdits au moins deux filtres à tamis (25) dans une plage de pression prédéterminée par:
- la surveillance de pression différentielle sur lesdits filtres à tamis (25),
- la comparaison de ladite pression différentielle avec une plage de pression prédéterminée par un opérateur de système,
- lorsque ladite pression différentielle dépasse ladite plage de pression prédéterminée, passer à initier le rétro-lavage progressif desdits filtres à tamis (25),
- lorsque ladite pression différentielle atteint une limite inférieure de ladite plage de pression prédéterminée, cesser le rétro-lavage.
